# EUROPÄISCHE PATENTSCHRIFT

(11) **EP 2 672 009 B1**
(45) Veröffentlichungstag und Bekanntmachung des Hinweises auf die Patenterteilung: **08.05.2019**
(21) Anmeldenummer: 13183034.1
(22) Anmeldetag: 28.03.2008
(51) Int. Cl.: E01C 23/088, E01C 21/00, B60K 25/02

(54) **SELBSTFAHRENDE BAUMASCHINE, INSBESONDERE STRASSENFRÄSMASCHINE, RECYCLER ODER STABILISIERER**
SELF-PROPELLED CONSTRUCTION MACHINE, IN PARTICULAR ROAD MILLING MACHINE, RECYCLER OR STABILISER
MACHINE DE CONSTRUCTION AUTOMOTRICE, NOTAMMENT MACHINE À FRAISER LA CHAUSSÉE, RECYCLEUR OU STABILISATEUR

(30) Priorität: 20.04.2007 DE 102007019202
(43) Veröffentlichungstag der Anmeldung: 11.12.2013
(62) Teilanmeldung aus: 08005940.5
(73) Patentinhaber: Wirtgen GmbH, 53578 Windhagen (DE)
(72) Erfinder: Berning, Christian, 50321 Brühl (DE); Simons, Dieter, 53567 Buchholz (DE); Busley, Peter, 53545 Linz/Rhein (DE)
(74) Vertreter: Oppermann, Frank

(56) Entgegenhaltungen:
- EP-A1- 1 167 626
- EP-A1- 1 640 201
- EP-A1- 1 818 524
- WO-A1-2004/005623
- WO-A1-2006/108757
- US-A- 3 948 049
- US-A1- 2002 084 120

## Beschreibung

Die Erfindung betrifft eine selbstfahrende Straßenfräsmaschine, die über eine Arbeitseinheit zur Durchführung von für die Baumaßnahme erforderlichen Arbeiten verfügt.

Im Straßenbau werden selbstfahrende Baumaschinen unterschiedlicher Bauart eingesetzt. Zu diesen zählen die bekannten Straßenfräsmaschinen, Recycler oder Stabilisierer. Mit den bekannten Straßenfräsmaschinen können bestehende Straßenschichten des Straßenoberbaus abgetragen und mit den bekannten Recyclern bestehende Straßenbeläge wiederhergestellt werden. Die bekannten Stabilisierer dienen der Vorbereitung des Unterbaus für den Straßenbau.

Derartige selbstfahrende Baumaschinen verfügen über eine Arbeitseinheit, bei der es sich um eine Arbeitswalze, insbesondere eine mit Fräsmeißeln bestückte Fräswalze handelt.

Die Arbeitswalze wird von einer Antriebseinheit angetrieben. Zur Übertragung der Antriebsleistung von der Antriebseinheit auf die Arbeitseinheit dient eine Kraftübertragungseinheit.

Die DE 10 2005 017 754 A1 (WO 2006/108757 A1) beschreibt eine selbstfahrende Baumaschine, insbesondere Straßenfräsmaschine, Recycler oder Stabilisierer. Die Antriebseinheit der bekannten Baumaschine weist einen Verbrennungsmotor auf, der die Arbeitswalze über ein Zugmittelgetriebe, insbesondere Riemengetriebe antreibt. Die Baumaschine sieht eine Aufteilung des Antriebsstrangs in zwei Gruppen vor, wobei die eine Gruppe den Verbrennungsmotor enthält, der relativ weich an dem Maschinenrahmen gelagert ist, wodurch die auf den Maschinenrahmen übertragenen Schwingungen stark gedämpft werden, und die andere Gruppe, die die Arbeitswalze enthält, mit hoher Festigkeit nahezu starr am Maschinenrahmen gelagert ist, wodurch höhere Kräfte abgestützt werden und damit höhere Leistungen übertragbar sind. Die WO 2006/108757 A1 offenbart die Merkmale des einleitenden Teils des Anspruchs 1.

Straßenfräsmaschinen mit nur einem Verbrennungsmotor sind auch aus der WO 2004/005623 A1 und der EP 1 167 626 A1 bekannt.

Die DE 10 2005 017 754 A1 weist explizit daraufhin, dass bei dem Bemühen, die Leistung zu erhöhen, der Platzbedarf für den Antriebsmotor steigt, der innerhalb der fest vorgegebenen Transportbreite der Baumaschine untergebracht werden muss. Ein Überschreiten der vorgegebenen Transportbreite hätte zur Folge, dass ein Transport der Baumaschine nur mit einer Sondergenehmigung möglich wäre. Aufgrund dieser Beschränkung sind der verfügbaren Leistung der Antriebseinheit der Baumaschine also Grenzen gesetzt.

Die EP 1 818 524 A1 beschreibt als landwirtschaftlich nutzbares Fahrzeug einen selbstfahrenden Feldhäcksler, der einen Fahrzeugrahmen umfasst, der von einem Fahrwerk getragen wird, das Vorderräder und Hinterräder aufweist. In Arbeitsrichtung vor den Vorderrädern ist eine Häckseltrommel mit einem Häckselmesser zum Zerkleinern des Ernteguts angeordnet. Am Heck des Fahrzeugs befindet sich oberhalb der Hinterräder eine Antriebseinheit, die zwei quer eingebaute Antriebmotoren umfasst, die sich in optimalen Arbeitspunkten betreiben lassen. In der EP 1 818 524 A1 findet sich der Hinweis, dass die Antriebsmotoren in einem beliebig ausgeführten Motorfahrzeug angeordnet sein können.

Aus der EP 1 640 201 A1 ist eine selbstfahrende Erntemaschine bekannt, die über einen Hauptmotor und einen Nebenmotor verfügt. Die Kopplung der beiden Motoren erfolgt durch eine Kupplung, die den Kraftschluss zwischen dem Nebenmotor und einem Stirnradgetriebe und somit zwischen dem Haupt- und Nebenmotor herstellt. Die maximale Breite und die Einbaulage der Antriebseinheit sind für die Konstruktion eines Feldhäckslers als land- und forstwirtschaftliche Maschine in der Praxis nicht von Bedeutung bzw. bei einem Feldhäcksler spielen andere konstruktive Gesichtspunkte eine Rolle. Die Antriebeinheit des bekannten Feldhäckslers befindet sich oberhalb der Hinterräder im hinteren Bereich der Maschine, was für die Gewichtsverteilung von Vorteil sein soll.

Der Erfindung liegt die Aufgabe zu Grunde, eine Straßenfräsmaschine der eingangs genannten Art zu schaffen, die ohne Überschreitung der fest vorgegebenen Transportbreite eine Antriebseinheit aufweist, die über eine gegenüber den bekannten Baumaschinen höhere Leistung verfügt.

Diese Aufgabe wird erfindungsgemäß mit den Merkmalen des Patentanspruchs 1 gelöst. Vorteilhafte Ausführungsformen der Erfindung sind Gegenstand der Unteransprüche.

Die erfindungsgemäße Straßenfräsmaschine zeichnet sich dadurch aus, dass die Antriebseinheit einen ersten Antriebsmotor und einen zweiten Antriebsmotor aufweist, wobei die Kraftübertragungseinrichtung derart ausgebildet ist, dass die Antriebsleistung des ersten und zweiten Antriebsmotors gleichzeitig auf die Arbeitseinheit übertragbar ist.

Auch wenn in diesem Zusammenhang von einem ersten und einem zweiten Antriebsmotor die Rede ist, kann die Antriebseinheit noch über weitere Antriebsmotoren verfügen, wobei die Antriebsleistung sämtlicher Motoren gleichzeitig auf die Arbeitseinheit übertragbar ist. In der Praxis wird aber eine Antriebseinheit mit "nur" einem ersten und einem zweiten Antriebsmotor ausreichend sein.

Im Hinblick auf die besonderen Anforderungen von selbstfahrenden Straßenfräsmaschinen und der sich aus den besonderen Anforderungen ergebenden Anordnung der einzelnen Aggregate der Baumaschine hat sich gezeigt, dass der Einsatz von zwei oder auch mehr als zwei Antriebsmotoren kleinerer Leistung anstelle eines Antriebsmotors mit einer größeren Leistung erhebliche Vorteile für die Baumaschine, insbesondere die Straßenfräse, den Recycler oder den Stabilisierer bietet.

Der Einsatz von zwei Antriebsmotoren kleinerer Leistung anstelle eines Motors größerer Leistung führt zu einem wesentlich kompakteren Aufbau der Antriebseinheit, der erst den Einsatz eines Antriebs mit einer gegenüber den bekannten Baumaschinen wesentlich höheren Leistung möglich macht. Bisher ist von Antriebseinheiten mit einer derart hohen Leistung bei Baumaschinen, insbesondere Straßenfräsen, Recyclern oder Stabilisierem, wegen der fest vorgegebenen Transportbreite der Maschine abgesehen worden. Eine Antriebseinheit mit einer höheren Leistung hätte eine Überschreitung der maximalen Transportbreite erforderlich gemacht, die eine Sondergenehmigung für den Transport der Baumaschine erfordert hätte.

Neben der Erhöhung der Leistung bietet die mehrmotorige Antriebseinheit noch die folgenden Vorteile.

Für die Antriebsmotoren können handelsübliche Motoren mit verhältnismäßig geringer Leistung eingesetzt werden, die im Allgemeinen gegenüber größeren Motoren mit höherer Leistung kostengünstiger sind.

Auch wird die Wartung der Baumaschine im Vergleich zu Baumaschinen geringer Leistung nicht durch den Einsatz eines anderen Motors erschwert, da die erfindungsgemäße Baumaschine höherer Leistung mit zwei Antriebsmotoren bezogen auf den einzelnen Antriebsmotor die gleichen Wartungsarbeiten oder auch Ersatzteile erfordert, wie eine Baumaschine mit geringerer Leistung, die nur über einen der Antriebsmotoren verfügt.

Des Weiteren können sich bei der mehrmotorigen Antriebseinheit Vorteile bei der Optimierung der Motoren, insbesondere Verbrennungsmotoren, im Hinblick auf Kraftstoffverbrauch und Schadstoffausstoß ergeben. Zum einen können zwei Motoren mit kleinerer Leistung gegebenenfalls mit geringerem Kraftstoffverbrauch und Schadstoffausstoß betrieben werden als ein Motor größerer Leitung. Zum anderen ist in dem Fall, dass nicht die gesamte Leistung erforderlich ist, beispielsweise im Fall von kleinen Frästiefen und im Rangierbetrieb bzw. beim Umsetzen der Maschine, ein Teillastbetrieb mit nur einem kleineren Motor geringerer Leistung möglich, der einen geringere Kraftstoffverbrauch und Schadstoffausstoß hat.

Bei der erfindungsgemäßen Straßenfräsmaschine weist die Arbeitseinheit eine mit Fräsmeißeln bestückte Fräswalze auf.

Der erste und zweite Antriebsmotor sind im Abstand zueinander, möglichst dicht nebeneinander liegend oder auch dicht übereinander liegend angeordnet sind. Die nebeneinander liegenden Motoren sind in einer Ebene angeordnet, die oberhalb der Ebene liegt, in der die Arbeitseinheit am Maschinenrahmen angeordnet ist. Dadurch wird bei der vorgegebenen Transportbreite eine besonders platzsparende Anordnung der einzelnen Aggregate erzielt. Die übereinander liegenden Motoren können in Fahrtrichtung auch vor oder hinter der Arbeitseinheit angeordnet sein.

Bei einer bevorzugten Ausführungsform der erfindungsgemäßen Straßenfräsmaschine weist die Kraftübertragungseinrichtung zur Übertragung der Antriebsleistung von der Antriebseinheit auf die Arbeitseinheit eine erste Einrichtung zum Schalten des Drehmoments des ersten Antriebsmotors und eine zweite Einrichtung zum Schalten des Drehmoments des zweiten Antriebsmotors, beispielsweise eine erste und zweite Schaltkupplung auf. Dadurch ist es möglich, den einen Antriebsmotor als Hauptmotor und den anderen Antriebsmotor als Zusatzmotor zu betreiben. Beispielsweise kann der zweite Antriebsmotor nur dann zugeschaltet werden, wenn die hohe Leistung erforderlich ist. Es ist grundsätzlich aber auch möglich, dass beide Antriebsmotoren nur gleichzeitig betrieben werden können. Dann kann auch eine der beiden Schaltkupplungen entfallen. Auf jeden Fall sollte aber die Möglichkeit bestehen, die Arbeitseinheit von der Antriebseinheit abzukoppeln.

Bei der erfindungsgemäßen Straßenfräsmaschine sind der erste und zweite Antriebsmotor in dem Maschinenrahmen quer zur Fahrtrichtung der Baumaschine angeordnet. Eine derartige Anordnung der Antriebsmotoren hat den Vorteil, dass die Kraftübertragungseinheit zur Übertragung der Leistung von der Antriebseinheit auf die Arbeitseinheit, deren Antriebswelle bei den bekannten Straßenfräsen, Recyclern oder Stabilisierem ebenfalls quer zur Fahrtrichtung verläuft, einen verhältnismäßig einfachen Aufbau haben kann.

Die Antriebseinheit der erfindungsgemäßen Straßenfräsmaschine erlaubt eine Leistungserhöhung bei der beschränkten Baubreite der Maschine unter Berücksichtigung der vorgegebenen Anordnung der einzelnen Aggregate, ohne dass umfangreiche, insbesondere kostspielige Veränderungen an der Konstruktion der Baumaschine erforderlich wären.

Die Antriebsmotoren sind vorzugsweise Verbrennungsmotoren, insbesondere Dieselmotoren. Vorzugsweise haben beide Motoren die gleiche Leistung, so dass eine Verdoppelung der Leistung bei gleichzeitigem Betrieb beider Motoren möglich ist. Grundsätzlich ist es aber auch möglich, dass einer der beiden Motoren eine größere Leistung als der andere Motor hat.

Weiterhin sind die Antriebsmotoren vorzugsweise Motoren gleicher Bauart, auch wenn sie sich in der Leistung voneinander unterscheiden sollten. Dadurch wird die Ersatzteilbeschaffung und Wartung der Motoren vereinfacht. Vorzugsweise sind die Motoren die gleichen Motoren, die sich weder in Bauart noch Leistung voneinander unterscheiden.

Neben der Arbeitseinheit kann die Antriebseinheit noch weitere Aggregate der Straßenfräsmaschine antreiben, zu denen beispielsweise Aggregate für die Höhenverstellung, die Lenkung sowie die Wasserpumpe zählen. Diese Verbraucher erfordern aber eine wesentlich geringere Leistung als der Antrieb der Arbeitswalze. Vorzugsweise werden diese Aggregate mittels Hydraulikpumpen angetrieben.

Die Einrichtung zum Antrieb der Hydraulikpumpen für die Nebenaggregate ist vorzugsweise an den ersten Antriebsmotor gekoppelt, der den Hauptmotor darstellt. Vorzugsweise weist der Antrieb für die Hydraulikpumpen für die Nebenaggregate ein Pumpenverteilergetriebe auf.

Die Kraftübertragungseinrichtung weist ein Zugmittelgetriebe auf, das ein Riemengetriebe ist.

Das Riemengetriebe weist eine erste Riemenscheibe, die drehfest mit einer ersten von dem ersten Antriebsmotor antreibbaren Abtriebswelle verbunden ist, und eine zweite Riemenscheibe auf, die drehfest mit einer von dem zweiten Antriebsmotor antreibbaren Abtriebswelle verbunden ist, und eine dritte Riemenscheibe auf, die mit einer die Arbeitseinheit antreibenden Antriebswelle drehfest verbunden ist. Über die Riemenscheiben läuft mindestens ein Treibriemen, wodurch die Antriebswelle der Arbeitseinheit von den Abtriebswellen der beiden Motoren angetrieben wird.

Die mehrmotorige Antriebseinheit der erfindungsgemäßen Baumaschine sieht in vorteilhafter Weise vor, dass die erste und zweite Abtriebswelle jeweils über eine erste und zweite gelenkige Kopplungseinrichtung an den ersten bzw. zweiten Antriebsmotor gekoppelt sind. Grundsätzlich ist es aber auch möglich, dass nur eine der beiden Antriebsmotoren an die Antriebswelle über eine gelenkige Kopplungseinrichtung gekoppelt ist. Daraus ergibt sich der Vorteil, dass die Lagerung des Antriebsmotors erheblich weicher erfolgen kann als die Lagerung der übrigen Elemente des Antriebsstrangs, die so steif wie möglich an dem Maschinenrahmen befestigt sein sollten. Die gelenkige Kopplungseinrichtung kann drehstarr, beispielsweise eine Kardanwelle, oder drehelastisch, beispielsweise eine Elastomerkupplung sein.

Die Einrichtungen zum Schalten des Drehmoments des ersten bzw. zweiten Antriebsmotors sind vorzugsweise zwischen dem Antriebsmotor und der ersten bzw. zweiten Abtriebswelle angeordnet. Zwischen Antriebsmotor und Abtriebswelle ist vorzugsweise auch die Einrichtung zum Antrieb von mindestens einer Hydraulikpumpe angeordnet. Dabei ist es grundsätzlich möglich, die Einrichtung zum Antrieb der Hydraulikpumpe zwischen Antriebsmotor und Schaltkupplung oder die Schaltkupplung zwischen Antriebsmotor und Einrichtung zum Antrieb der Hydraulikpumpen anzuordnen.

Verbrennungsmotoren im Allgemeinen geben prinzipbedingt keine gleichförmige Drehbewegung ab. Der Drehung des Abtriebs sind immer auch Drehschwingungen überlagert. Darüber hinaus werden über die Kopplungseinrichtungen auch Schwingungen in den Maschinenrahmen eingeleitet. Bei Verbrennungsmotoren, insbesondere Dieselmotoren der neueren Generation, die sich durch eine Leichtbauweise auszeichnen, treten bei geänderten Zündzeitpunkten und Einspritzzeitpunkten zur Erfüllung der geltenden Abgasvorschriften diese Schwingungen verstärkt auf. Die Drehschwingungen können aufgrund von Materialverschleiß und -ermüdung zu geringeren Standzeiten beispielsweise der Getriebe oder Kupplungen im Abtriebstrang führen. Die sonstigen Schwingungen, sofern sie nicht von der elastischen Kopplungseinrichtung aufgenommen werden, setzen den Komfort herab, indem sie z. B. als Schall abgestrahlt werden.

Die Antriebseinheit der erfindungsgemäßen Straßenfräsmaschine mit einem ersten und zweiten Verbrennungsmotor, insbesondere Dieselmotoren in Leichtbauweise, bietet auch in Bezug auf diese Schwingungen Vorteile. Bei einer bevorzugten Ausführungsform der Antriebseinheit ist im Betrieb beider Verbrennungsmotoren der Kurbelwellenwinkel der Kurbelwelle des ersten Verbrennungsmotors in Bezug auf den Kurbelwellenwinkel der Kurbelwelle des zweiten Verbrennungsmotors derart einstellbar ist, dass sich die von beiden Verbrennungsmotoren erzeugten Drehschwingungen bei der gemeinsamen Übertragung der Antriebsleistung des ersten und zweiten Verbrennungsmotors auf die Arbeitseinheit zumindest teilweise gegenseitig eliminieren. Auch die in den Maschinenrahmen eingeleiteten Schwingungen können dadurch reduziert werden.

Im Folgenden werden zwei Ausführungsbeispiele der Erfindung unter Bezugnahme auf die Zeichnungen im Einzelnen erläutert.

Es zeigen:
- Fig. 1: als Beispiel für eine selbstfahrende Straßenfräsmaschine eine Großfräse in der Seitenansicht,
- Fig. 2: einen Schnitt durch die Antriebseinheit und Arbeitseinheit zusammen mit der Kraftübertragungseinrichtung der selbstfahrenden Straßenfräsmaschine in vereinfachter schematischer Darstellung,
- Fig. 3: die Anordnung von Antriebseinheit, Arbeitseinheit und Kraftübertragungseinrichtung eines ersten Ausführungsbeispiels der selbstfahrenden Straßenfräsmaschine von Fig. 2 in der Draufsicht,
- Fig. 4: die Antriebseinheit, Arbeitseinheit und Kraftübertragungseinheit der Baumaschine von Fig. 2 in der Seitenansicht,
- Fig. 5: eine Draufsicht auf die Arbeitseinheit, Antriebseinheit und Kraftübertragungseinrichtung eines zweiten Ausführungsbeispiels der selbstfahrenden Straßenfräsmaschine von Fig. 2 in vereinfachter schematischer Darstellung, das aber nicht Gegenstand der Erfindung ist, und
- Fig. 6: eine Seitenansicht der Antriebseinheit, Arbeitseinheit und Kraftübertragungseinrichtung der Straßenfräsmaschine von Fig. 5.

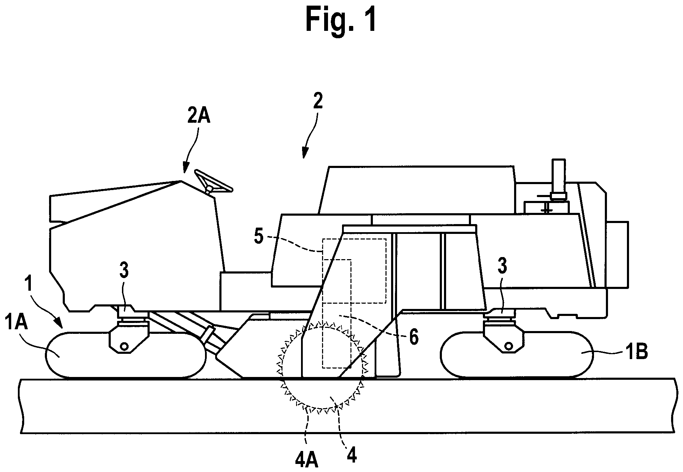

Fig. 1 zeigt als Beispiel für eine selbstfahrende Straßenfräsmaschine eine so genannte Großfräse zum Abfräsen von Straßenbelägen aus Asphalt, Beton oder dergleichen. Die Großfräse weist einen von einem Fahrwerk 1 getragenen Maschinenrahmen 2 mit einem Fahrstand 2A auf. Das Fahrwerk 1 der Fräsmaschine umfasst beispielsweise vier Kettenlaufwerke 1A, 1B, die an der Vorder- und Rückseite auf beiden Seiten des Fahrzeugrahmens angeordnet sind. Die Kettenlaufwerke, die ein Vor- und Zurückbewegen der Großfräse entlang einer Fahrspur erlauben, sind höhenverstellbar an Hubsäulen 3 befestigt, die am Maschinenrahmen 2 angebracht sind, so dass der Maschinenrahmen in eine gewünschte Lage positioniert werden kann. Es versteht sich, dass anstelle von Kettenlaufwerken auch Räder vorgesehen sein können.

Die Straßenfräsmaschine verfügt über eine Arbeitseinheit, bei der es sich um eine Fräseinrichtung mit einer Fräswalze 4 handelt, die mit Fräsmeißeln 4A bestückt ist. Die Fräswalze 4 ist am Maschinenrahmen 1 zwischen den vorderen und hinteren Kettenlaufwerken 1A, 1B angeordnet. Mit der Fräswalze 4 wird der Straßenbelag abgefräst. Für den Antrieb der Fräswalze weist die Fräsmaschine eine von dem Maschinenrahmen 2 getragene Antriebseinheit 5 auf, die in Fig. 1 in gestrichelten Linien dargestellt ist. Die Antriebseinheit 5 ist an dem Maschinenrahmen 1 zwischen dem vorderen und hinteren Kettenlaufwerk 1A, 1B in einer Ebene angeordnet, die oberhalb der Ebene liegt, in der sich die Fräswalze 4 befindet.

Die Antriebseinheit 5 treibt neben der Fräswalze 4 auch die Kettenlaufwerke 1A, 1B sowie weitere Aggregate der Fräsmaschine an, zu denen beispielsweise die Hubsäulen 3 für die Höhenverstellung des Maschinenrahmens 2 oder nicht dargestellte Stellantriebe für die Lenkung oder eine nicht dargestellte Wasserpumpe zur Kühlung der Fräsmeißel 4A der Fräswalze 4 zählen.

Zur Übertragung der Antriebsleistung von der Antriebseinheit 5 auf die Fräswalze 4 dient eine Kraftübertragungseinrichtung 6, die in Fig. 1 in gestrichelten Linien nur andeutungsweise dargestellt ist.

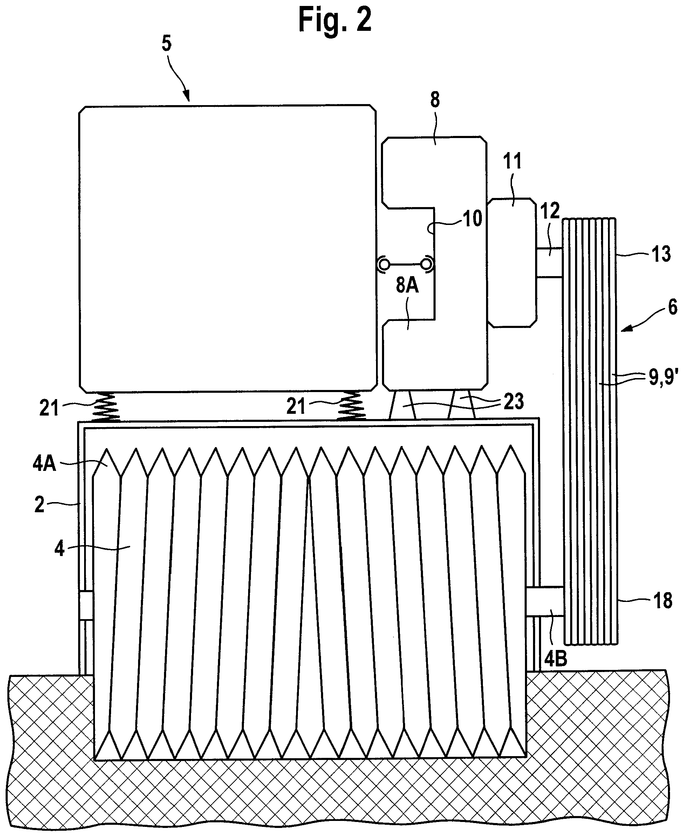

Nachfolgend werden Aufbau und Funktionsweise der Antriebseinheit 5, Arbeitseinheit 4 und Kraftübertragungseinrichtung 6 der Baumaschine unter Bezugnahme auf die Fig. 2 bis 6 anhand von zwei Ausführungsbeispielen näher erläutert.

Fig. 2 zeigt, dass die mit Fräsmeißeln 4 bestückte Fräswalze quer zur Fahrrichtung in dem Maschinenrahmen 2 angeordnet ist. Die Fräswalze 4 weist eine an dem Maschinenrahmen 2 gelagerte Antriebswelle 4B auf, die sich quer zur Fahrtrichtung erstreckt. Die Antriebswelle kann auch in einem Walzengehäuse gelagert sein, das wiederum mit dem Maschinenrahmen verbunden ist.

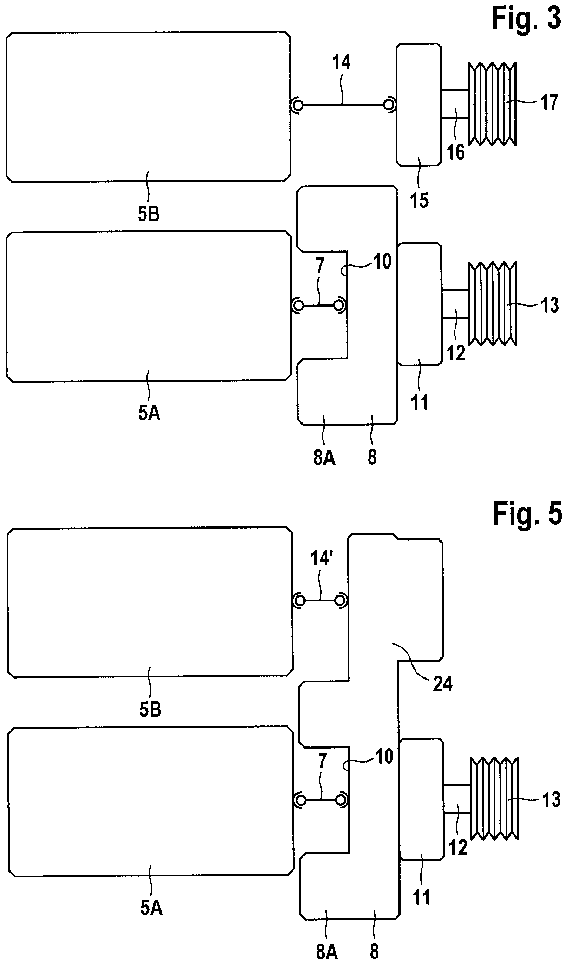

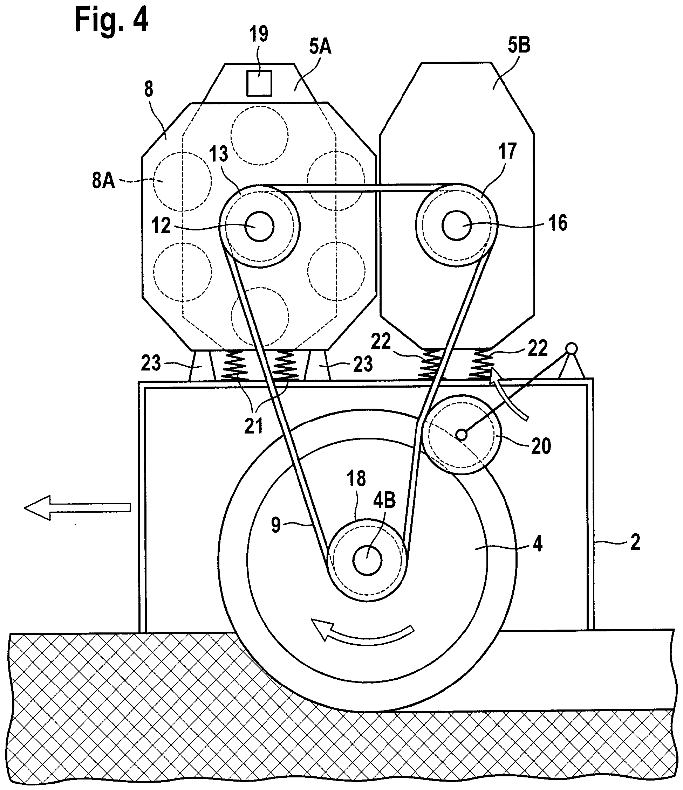

Die Antriebseinheit 5 zum Antrieb der Fräswalze 4 umfasst einen ersten und einen zweiten Verbrennungsmotor 5A, 5B, insbesondere zwei Dieselmotoren (Fig. 3, Fig. 4). Bei dem vorliegenden Ausführungsbeispiel handelt es sich bei beiden Dieselmotoren um die gleichen Motoren. Die beiden Dieselmotoren können aber auch Motoren unterschiedlicher Bauart und/oder Leistung sein.

Der erste Motor, der nachfolgend als Hauptmotor 5A bezeichnet wird, ist über eine gelenkige Kopplungseinrichtung 7, beispielsweise eine Kardanwelle oder Elastomerkupplung, mit einem Pumpenverteilergetriebe 8 (PVG) gekoppelt (Fig. 3). Im Inneren des Pumpenverteilergetriebes 8 ist ein Stirnradgetriebe angeordnet, das eine Mehrzahl von Hydraulikpumpen 8A gemeinsam antreibt, die umfangsmäßig verteilt angeordnet sind (Fig. 4). Durch die Anordnung der Hydraulikpumpen 8A ergibt sich ein zentraler freier Innenraum 10 zwischen den Hydraulikpumpen 8A, in dem sich die Kopplungseinrichtung 7 befindet. Dadurch wird eine besonders platzsparende Anordnung der Komponenten erzielt, so dass im Hinblick auf die vorgegebene Transportbreite der Baumaschine ausreichend Raum für den quer eingebauten Motor zur Verfügung steht.

Das Pumpenverteilergetriebe 8 ist über eine Einrichtung 11 zum Schalten des Drehmoments, beispielsweise eine Schaltkupplung mit einer Antriebswelle 12 gekoppelt, auf der drehfest eine Riemenscheibe 13 sitzt.

Der zweite Motor, der nachfolgend als Nebenmotor 5B bezeichnet wird, ist quer zur Fahrtrichtung in engem Abstand zu dem Hauptmotor 5A angeordnet (Fig. 3). Der Nebenmotor 5B ist über eine weitere gelenkige Kopplungseinrichtung 14, beispielsweise eine Kardanwelle oder Elastomerkupplung, mit einer zweiten Einrichtung 15 zum Schalten des Drehmoments, beispielsweise einer Schaltkupplung gekoppelt, an die wiederum eine Antriebswelle 16 gekoppelt ist, auf der eine zweite Riemenscheibe 17 sitzt.

Es ist auch möglich, dass das Pumpenverteilergetriebe 8 nicht dem Hauptmotor 5A, sondern dem Nebenmotor 5B zugeordnet ist. Ebenfalls ist es möglich, dass nicht das Pumpenverteilergetriebe 8 direkt an den Hauptmotor und die Schaltkupplung 11 an das Pumpenverteilergetriebe, sondern die Schaltkupplung 11 direkt an den Hauptmotor und das Pumpenverteilergetriebe an die Schaltkupplung gekoppelt ist. Dann kann der Freiraum 10 des Pumpenverteilergetriebes 8 anstelle der Kopplungseinrichtung 7 die Schaltkupplung 11 aufnehmen. In beiden Fällen ergibt sich eine kompakte Bauweise.

Auf der Antriebswelle 4A der Fräswalze 4 sitzt fest eine weitere Riemenscheibe 18. Auf den beiden Riemenscheiben 13 und 17 des Haupt- und Nebenmotors 5a und 5b sowie der Riemenscheibe 18 der Fräswalze 4 laufen mehrere Treibriemen 9, die von einer gelenkig am Maschinenrahmen befestigten Spannrolle 20 gespannt werden. Mit dem Riemengetriebe werden die Leistungen des Haupt- und Nebenmotors 5A, 5B addiert und auf die Fräswalze übertragen. Das Antriebskonzept erlaubt ein wahlweises Zu-/Abschalten von Haupt- und Nebenmotor in Abhängigkeit von der benötigten Leistung. Dadurch wird eine Antriebseinheit mit einem kompakten Aufbau und einer hohen Leistung geschaffen.

Die Hydraulikpumpen 8A, die von dem Pumpenverteilergetriebe 8 angetrieben werden, dienen dem Antrieb zusätzlicher Aggregate, die aber eine wesentlich geringere Leistung als der Antrieb der Fräswalze benötigen.

Der Haupt- und Nebenmotor 5A, 5B sind mit Hilfe von elastischen Feder-/Dämpfungsmitteln 21, die eine geringe Federsteifigkeit aufweisen, an dem Maschinenrahmen 2 befestigt, so dass die insbesondere bei diesen Motoren auftretenden Vibrationen geringstmöglich auf den Maschinenrahmen übertragen werden. Demgegenüber ist der übrige Teil des Antriebsstrangs, der das Pumpenverteilergetriebe 8 des Hauptmotors 5A einschließt, mit Feder-/Dämpfungselementen 23 an dem Maschinenrahmen 2 befestigt, die eine hohe Federsteifigkeit aufweisen bzw. starr ausgebildet sind.

Der Aufbau und die Funktionsweise der Kopplungseinrichtung und Feder-/Dämpfungsmittel sind in der DE 10 2005 017 754 A1 im Einzelnen beschrieben.

Nachfolgend wird eine alternative Ausführungsform unter Bezugnahme auf die Fig. 2, 5 und 6 beschrieben, die sich von dem unter Bezugnahme auf die Fig. 2, 3 und 4 beschriebenen Ausführungsbeispiel dadurch unterscheidet, dass die Addition der Leistungen der beiden Motoren 5A, 5B nicht über ein Riemengetriebe, sondern ein Stirnradgetriebe erfolgt.

Diese Ausführungsform ist aber nicht Gegenstand der Erfindung. Die sich einander entsprechenden Baugruppen und Teile sind mit den gleichen Bezugsziffern bezeichnet.

Der Hauptmotor 5A und der Nebenmotor 5B sind über ein Stirnradgetriebe 21 miteinander verbunden, das in das Pumpenverteilergetriebe 8 des Hauptmotors 5A integriert sein kann. Insofern bilden Stirnradgetriebe und Pumpenverteilergetriebe eine Getriebeeinheit. Das Stirnradgetriebe kann über eine Schaltkupplung 15 verfügen, die in die Getriebeeinheit integriert ist. Die Kopplung des Nebenmotors 5A an das Stirnradgetriebe 21 erfolgt wieder über eine Kopplungseinrichtung 14', insbesondere Kardanwelle oder Elastomerkupplung.

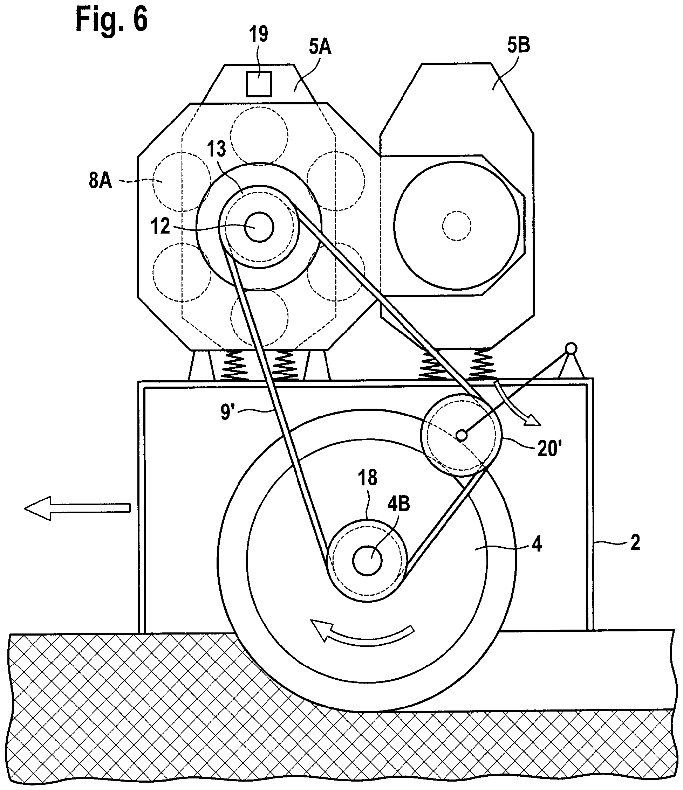

Fig. 6 zeigt, dass die Treibriemen 9' über die den Hauptmotor 5A zugeordnete Riemenscheibe 13, die Riemenscheibe 18 der Fräswalze 4 und die Spannrolle 20' laufen, die bei diesem Ausführungsbeispiel von den Treibriemen 9' von außen umschlungen wird.

Anstelle der unter Bezugnahme auf die Figuren 2 bis 6 beschriebenen Ausführungsbeispiele ist es auch möglich, die beiden Motoren mit einem ersten Zugmittelgetriebe miteinander zu koppeln, so dass die Antriebsleistungen addiert werden, und dann mit einem zweiten Zugmittelgetriebe die Leistung beider Motoren auf die Arbeitseinheit zu übertragen.

Bei dieser alternativen Ausführungsform kann an der Abtriebswelle des einen Motors eine Riemenscheibe und an der Abtriebswelle des anderen Motors zwei Riemenscheiben vorgesehen sein, wobei ein erster Treibriemen oder mehrere Treibriemen über die erste Riemenscheibe der beiden Riemenscheiben des einen Motors und die Riemenscheibe des anderen Motors läuft. Ein zweiter Treibriemen oder mehrere Treibriemen können über die andere der beiden Riemenscheiben des einen Motors und die Riemenscheibe der Arbeitswalze laufen. Dabei ist grundsätzlich unerheblich, ob der eine oder andere Motor der Haupt- oder Nebenmotor ist. Diese Ausführungsform entspricht dem Ausführungsbeispiel von den Figuren 5 und 6, wobei die beiden Motoren aber nicht über das Stirnradgetriebe, sondern über mindestens einen weiteren Treibriemen miteinander gekoppelt sind.

Bei den Antriebsmotoren 5A, 5B der Antriebseinheit der erfindungsgemäßen Baumaschine handelt es sich vorzugsweise um Dieselmotoren in Leichtbauweise, bei denen grundsätzlich Drehschwingungen auftreten können.

Bei einer bevorzugten Ausführungsform der Antriebseinheit sind der Kurbelwellenwinkel der Kurbelwelle des ersten und zweiten Verbrennungsmotors 5A, 5B, insbesondere Dieselmotors, im Betrieb beider Verbrennungsmotoren einstellbar, so dass die Kurbelwelle des ersten Motors in Bezug die Kurbelwelle des zweiten Motors um einen wählbaren Winkel vor- bzw. nachlaufen kann.

Die Antriebseinheit 4 verfügt über eine Regeleinheit 19 zur Reduzierung der Schwingungen, die in den Figuren 4 und 5 schematisch dargestellt ist. Die Regeleinheit 19 ist derart ausgebildet, dass der Kurbelwellenwinkel der nicht dargestellten Kurbelwelle des ersten Verbrennungsmotors 5A in Bezug auf den Kurbelwellenwinkel der nicht dargestellten Kurbelwelle des zweiten Verbrennungsmotors 5B derart eingestellt wird, dass sich die von beiden Verbrennungsmotoren erzeugten Drehschwingungen bei der gemeinsamen Übertragung der Antriebsleistung des ersten und zweiten Motors mit der Kraftübertragungseinrichtung 6 auf die Arbeitseinheit 4 zumindest teilweise eliminieren. Beispielsweise wird der erste Motor 5A so betrieben, dass dessen Kurbelwelle um einen bestimmten Winkel vorauseilt, während der zweite Motor 5B so betrieben wird, dass dessen Kurbelwelle um einen bestimmten Winkel nacheilt. Die auf den ersten und zweiten Motor zurückzuführenden Drehschwingungen, die sich auf den Antriebsstrang übertragen, sind demnach um einen bestimmten Phasenwinkel zueinander verschoben. Die Regeleinheit 19 stellt die Kurbelwellenwinkel derart ein, dass sich die im Antriebsstrang überlagernden Drehschwingungen zumindest teilweise eliminieren, d.h. sich Schwingungen mit einer bestimmten Amplitude in einer Richtung durch Schwingungen mit ähnlich großer Amplitude in die entgegengesetzte Richtung kompensieren. Gleiches gilt für die in den Maschinenrahmen eingeleiteten sonstigen Schwingungen.

## Patentansprüche

1. Straßenfräsmaschine mit
einem Maschinenrahmen (2), der von einem Fahrwerk (1) getragenen wird, einer Arbeitseinheit (4) zur Durchführung von für die Baumaßnahme erforderlichen Arbeiten, die eine mit Fräsmeißeln bestückte Fräswalze (4) aufweist, einer von dem Maschinenrahmen (1) getragenen Antriebseinheit (5) für den Antrieb der Arbeitseinheit (4), und
einer Kraftübertragungseinrichtung (6) zur Übertragung der Antriebsleistung von der Antriebseinheit (5) auf die Arbeitseinheit (4), **dadurch gekennzeichnet, dass**
das Fahrwerk (1) vier an der Vorder- und Rückseite der Straßenfräsmaschine auf beiden Seiten des Maschinenrahmens (1) angeordnete Kettenlaufwerke (1A, 1B) aufweist, die höhenverstellbar an Hubsäulen (3) befestigt sind, die am Maschinenrahmen (1) angebracht sind,
die Arbeitseinheit (4) am Maschinenrahmen (1) in Längsrichtung der Straßenfräsmaschine zwischen den vorderen und hinteren Kettenlaufwerken (1A, 1B) angeordnet ist,
die Antriebseinheit (5) einen ersten Antriebsmotor (5A) und einen zweiten Antriebsmotor (5B) aufweist,
die Kraftübertragungseinrichtung (6) derart ausgebildet ist, dass die Antriebsleistung des ersten und zweiten Antriebsmotors (5A, 5B) gemeinsam auf die Arbeitseinheit (4) übertragbar ist,
der erste und zweite Antriebsmotor (5A, 5B) an dem Maschinenrahmen (1) in Längsrichtung der Baumaschine zwischen den Hubsäulen (3) der vorderen und hinteren Kettenlaufwerke (1A,1B) quer zur Fahrtrichtung der Baumaschine angeordnet sind, und
der erste und zweite Antriebsmotor (5A, 5B) im Abstand zueinander in einer Ebene des Maschinenrahmens (2) angeordnet sind, die oberhalb der Ebene liegt, in der die Arbeitseinheit (4) am Maschinenrahmen angeordnet ist, wobei
die Kraftübertragungseinrichtung (6) mindestens ein Riemengetriebe (9, 13, 17, 18) aufweist, mit dem die Antriebsleistung des ersten und zweiten Antriebsmotors (5A, 5B) gleichzeitig auf die Arbeitseinheit (4) übertragbar ist und
das Riemengetriebe (9, 13, 17, 18) eine erste Riemenscheibe (13), die drehfest mit einer ersten von dem ersten Antriebsmotor (5A) antreibbaren Abtriebswelle (12) verbunden ist, und eine zweite Riemenscheibe (17) aufweist, die drehfest mit einer von dem zweiten Antriebsmotor (5B) antreibbaren Abtriebswelle (16) verbunden ist, und eine dritte Riemenscheibe (18) aufweist, die mit einer die Arbeitseinheit (4) antreibenden Antriebswelle (4A) drehfest verbunden ist, wobei über die Riemenscheiben (13, 17, 18) mindestens ein Treibriemen (9) läuft.

2. Straßenfräsmaschine nach Anspruch 1, **dadurch gekennzeichnet, dass** die Kraftübertragungseinrichtung (6) eine erste Einrichtung (11) zum Schalten des Drehmomentes des ersten Antriebsmotors (5A) und/oder eine zweite Einrichtung (15) zum Schalten des Drehmomentes des zweiten Antriebsmotors (5B) aufweist.

3. Straßenfräsmaschine nach Anspruch 1 oder 2, **dadurch gekennzeichnet, dass** der erste und zweite Antriebsmotor (5A, 5B) Verbrennungsmotoren, insbesondere Dieselmotoren sind.

4. Straßenfräsmaschine nach einem der Ansprüche 1 bis 3, **dadurch gekennzeichnet, dass** der erste Antriebsmotor (5A) und zweite Antriebsmotor (5B) die gleiche Leistung haben.

5. Straßenfräsmaschine nach einem der Ansprüche 1 bis 3, **dadurch gekennzeichnet, dass** der erste Antriebsmotor (5A) eine größere Leistung als der zweite Antriebsmotor (5B) hat.

6. Straßenfräsmaschine nach einem der Ansprüche 1 bis 3, **dadurch gekennzeichnet, dass** der erste und zweite Antriebsmotor (5A, 5B) Motoren gleicher Bauart sind.

7. Straßenfräsmaschine nach einem der Ansprüche 1 bis 3, **dadurch gekennzeichnet, dass** der erste und zweite Antriebsmotor (5A, 5B) die gleichen Antriebsmotoren sind.

8. Straßenfräsmaschine nach einem der Ansprüche 1 bis 7, **dadurch gekennzeichnet, dass** die Kraftübertragungseinrichtung (6) eine Einrichtung (8) zum Antrieb von mindestens einer Hydraulikpumpe (8A) aufweist.

9. Straßenfräsmaschine nach Anspruch 8, **dadurch gekennzeichnet, dass** die Einrichtung (8) zum Antrieb von mindestens einer Hydraulikpumpe ein Pumpenverteilergetriebe für mehrere Hydraulikpumpen (8A) aufweist.

10. Straßenfräsmaschine nach Anspruch 8 oder 9, **dadurch gekennzeichnet, dass** die Einrichtung (8) zum Antrieb von mindestens einer Hydraulikpumpe an den ersten Antriebsmotor (5A) gekoppelt ist.

11. Straßenfräsmaschine nach einem der Ansprüche 1 bis 10, **dadurch gekennzeichnet, dass** die erste Abtriebswelle (12) über eine erste gelenkige Kopplungseinrichtung (7) an den ersten Antriebsmotor (5A) und die zweite Abtriebswelle (16) über eine zweite gelenkige Kopplungseinrichtung (14) an den zweiten Antriebsmotor (5A) gekoppelt ist.

12. Straßenfräsmaschine nach Anspruch 2, oder nach Anspruch 2 und zusätzlich einem der Ansprüche 3 bis 11, **dadurch gekennzeichnet, dass** die erste Einrichtung (11) zum Schalten des Drehmomentes des ersten Antriebsmotors (5A) zwischen dem Antriebsmotor (5A) und der ersten Abtriebswelle (12) angeordnet ist.

13. Straßenfräsmaschine Anspruch 2, oder nach Anspruch 2 und zusätzlich einem der Ansprüche 3 bis 12, **dadurch gekennzeichnet, dass** die zweite Einrichtung (15) zum Schalten des Drehmomentes des zweiten Antriebsmotors (5B) zwischen dem Antriebsmotor (5B) und der zweiten Abtriebswelle (16) angeordnet ist.

14. Straßenfräsmaschine nach Anspruch 8, oder nach Anspruch 8 und zusätzlich einem der Ansprüche 9 bis 13, **dadurch gekennzeichnet, dass** die Einrichtung (8) zum Antrieb von mindestens einer Hydraulikpumpe zwischen dem ersten Antriebsmotor (5A) und der ersten Abtriebswelle (12) angeordnet ist.

15. Straßenfräsmaschine nach einem der Ansprüche 1 bis 14, **dadurch gekennzeichnet, dass** der erste Antriebsmotor (5A) und der zweite Antriebsmotor (5B) Verbrennungsmotoren mit Kurbelwellen sind, wobei der Kurbelwellenwinkel der Kurbelwelle des ersten Motors in Bezug auf den Kurbelwellenwinkel der Kurbelwelle des zweiten Motors einstellbar ist.

16. Straßenfräsmaschine nach Anspruch 15, **dadurch gekennzeichnet, dass** der Kurbelwellenwinkel der Kurbelwelle des ersten Antriebsmotors (5A) in Bezug auf den Kurbelwellenwinkel der Kurbelwelle des zweiten Antriebsmotors (5B) derart einstellbar ist, dass sich die von den beiden Motoren erzeugten Drehschwingungen bei der gemeinsamen Übertragung der Antriebsleistung des ersten und zweiten Antriebsmotors (5A, 5B) auf die Arbeitseinheit (4) zumindest teilweise eliminieren.

## Claims

1. A road-milling machine comprising
a frame (2) carried by a running gear (1),
a working unit (4) for performing work required for the civil engineering operation, the working unit comprising a milling drum (4) fitted with milling cutters,
a drive unit (5) carried by the frame (1) of the machine, to drive the working unit (4),
and a power transmitting means (6) for transmitting the driving power from the drive unit (5) to the working unit (4),
**characterised in that**
the running gear (1) comprises four track-laying units (1A, 1B) which are arranged at the front and rear ends on the two sides of the frame (1) of the machine, the track-laying units being vertically adjustable fastened to lifting columns (3) which are mounted on the frame (1) of the machine,
the working unit (4) is arranged on the frame (1) of the machine between the front and back track-laying units (1A, 1B) in the direction of the road-milling machine,
the drive unit (5) comprises a first drive engine (5A) and a second drive engine (5B),
the power transmitting means (6) is so designed that the driving powers coming from the first and the second drive engines (5A, 5B) can be transmitted to the working unit (4) together,
the first and the second drive engines (5A, 5B) are arranged on the frame (2) of the machine between the lifting columns (3) of the front and back track-laying units (1A, 1B) in the direction of the civil engineering machine, the first and the second drive engines (5A, 5B) being arranged transversely to the direction of travel of the civil engineering machine, and
the first and the second drive engines (5A, 5B) are arranged at a spacing from one another in a plane of the frame (2) of the machine which lies above the plane in which the working unit (4) is arranged on the frame of the machine,
the power transmitting means (6) comprising at least one belt transmission (9, 13, 17, 18) by which the driving powers coming from the first and second drive engines (5A, 5B) can be transmitted to the drive unit (4) simultaneously,
the belt transmission (9, 13, 17, 18) comprising a first belt pulley (13) which is connected to be solid in rotation therewith to a first output shaft (12) able to be driven by the first drive engine (5A), and a second belt pulley (17) which is connected to be solid in rotation therewith to an output shaft (16) able to be driven by the second drive engine (5B), and a third belt pulley (18) which is connected to be solid in rotation therewith to a drive shaft (4A) driving the working unit (4), with at least one drive belt (9) running over the belt pulleys (13, 17, 18).

2. A road-milling machine according to claim 1, **characterised in that** the power transmitting means (6) has a first means (11) for connecting/disconnecting the torque coming from the first drive engine (5A) and/or a second means (15) for connecting/disconnecting the torque coming from the second drive engine (5B).

3. A road-milling machine according claim 1 or 2, **characterised in that** the first and second drive engines (5A, 5B) are internal combustion engines and in particular diesel engines.

4. A road-milling machine according to one of claims 1 to 3 **characterised in that** the first drive engine (5A) and the second drive engine (5B) are of the same power.

5. A road-milling machine according to one of claims 1 to 3, **characterised in that** the power of the first drive engine (5A) is higher than that of the second drive engine (5B).

6. A road-milling machine according to one of claims 1 to 3, **characterised in that** the first and second drive engines (5A, 5B) are engines of the same design.

7. A road-milling machine according to one of claims 1 to 3, **characterised in that** the first and second drive engines (5A, 5B) are identical drive engines.

8. A road-milling machine according to one of claims 1 to 7, **characterised in that** the power transmitting means (6) has a means (8) for driving at least one hydraulic pump (8A).

9. A road-milling machine according to claim 8, **characterised in that** the means (8) for driving at least one hydraulic pump has a pump distribution gearbox for a plurality of hydraulic pumps (8A).

10. A road-milling machine according to claim 8 or 9, **characterised in that** the means (8) for driving at least one hydraulic pump is coupled to the first drive engine (5A).

11. A road-milling machine according to one of claims 1 to 10, **characterised in that** the first output shaft (12) is coupled via a first hinging coupling means (7) to the first drive engine (5A) and the second output shaft (16) is coupled via a second hinging coupling means (14) to the second drive engine (5A).

12. A road-milling machine according to claim 2, or claim 2 and additionally one of claims 3 to 11, **characterised in that** the first means (11) for connecting/disconnecting the torque coming from the first drive engine (5A) is arranged between the drive engine (5A) and the first output shaft (12).

13. A road-milling machine according to claim 2, or claim 2 and additionally one of claims 3 to 12, **characterised in that** the second means (15) for connecting/disconnecting the torque coming from the second drive engine (5B) is arranged between the drive engine (5B) and the second output shaft (16).

14. A road-milling machine according to claim 2, or claim 2 and additionally one of claims 3 to 13, **characterised in that** the means (8) for driving at least one hydraulic pump is arranged between the first drive engine (5A) and the first output shaft (12).

15. A road-milling machine according to one of claims 1 to 14, **characterised in that** the first drive engine (5A) and the second drive engine (5B) are internal combustion engines having crankshafts, the crankshaft angle of the crankshaft of the first engine being able to be set relative to the crankshaft angle of the crankshaft of the second engine.

16. A road-milling machine according to claim 15, **characterised in that** the crankshaft angle of the crankshaft of the first engine (5A) is able to be set relative to the crankshaft angle of the crankshaft of the second engine (5B) in such a way that the rotary oscillations which are produced by the two engines at least partly cancel each other out when the driving powers coming from the first and second drive engines (5A, 5B) are being transmitted to the working unit (4) together.

## Revendications

1. Machine de fraisage avec
un bâti de machine (2) qui est porté par un mécanisme de roulement (1),
une unité de travail (4) pour la mise en oeuvre des travaux nécessaires au projet de construction qui présente un rouleau de fraisage (4) équipé de burins de fraisage,
une unité d'entraînement (5) portée par le bâti de machine (1) pour l'entraînement de l'unité de travail (4), et
un dispositif de transmission de forces (6) pour la transmission de la puissance d'entraînement de l'unité d'entraînement (5) à l'unité de travail (4),
**caractérisée en ce que**
le mécanisme de roulement (1) présente quatre organes de roulement sur chenille (1A, 1B) agencés sur le côté avant et arrière de la machine de fraisage sur les deux côtés du bâti de machine (1) qui sont fixés de manière réglable en hauteur sur des colonnes de levage (3) qui sont montées sur le bâti de machine (1),
l'unité de travail (4) est agencée sur le bâti de machine (1) dans le sens longitudinal de la machine de fraisage entre les organes de roulement sur chenille (1A,1B) avant et arrière, l'unité d'entraînement (5) présente un premier moteur d'entraînement (5A) et un second moteur d'entraînement (5B),
le dispositif de transmission de forces (6) est réalisé de telle manière que la puissance d'entraînement du premier et du second moteur d'entraînement (5A, 5B) puisse être transférée conjointement à l'unité de travail (4),
le premier et second moteur d'entraînement (5A, 5B) sont agencés sur le bâti de machine (1) dans le sens longitudinal de l'engin de chantier entre les colonnes de levage (3) des organes de roulement sur chenille (1A,1B) avant et arrière transversalement au sens de la marche de l'engin de chantier, et
le premier et second moteur d'entraînement (5A, 5B) sont agencés à distance l'un de l'autre dans un plan du bâti de machine (2) qui se trouve au-dessus du plan dans lequel l'unité de travail (4) est agencée sur le bâti de machine, dans laquelle le dispositif de transmission de forces (6) présente au moins une transmission à courroie (9, 13, 17, 18), permettant de transmettre simultanément la puissance d'entraînement du premier et second moteur d'entraînement (5A, 5B) à l'unité de travail (4) et
la transmission à courroie (9, 13, 17, 18) présente une première poulie à courroie (13) qui est reliée de manière solidaire en rotation à un premier arbre de sortie (12) pouvant être entraîné par le premier moteur d'entraînement (5A), et une deuxième poulie à courroie (17) qui est reliée de manière solidaire en rotation à un arbre de sortie (16) pouvant être entraîné par le second moteur d'entraînement (5B), et une troisième poulie à courroie (18) qui est reliée de manière solidaire en rotation à un arbre d'entraînement (4A) entraînant l'unité de travail (4), dans laquelle au moins une courroie d'entraînement (9) passe sur les poulies à courroie (13, 17, 18).

2. Machine de fraisage selon la revendication 1, **caractérisée en ce que** le dispositif de transmission de forces (6) présente un premier dispositif (11) pour la commutation du couple du premier moteur d'entraînement (5A) et/ou un second dispositif (15) pour la commutation du couple du second moteur d'entraînement (5B).

3. Machine de fraisage selon la revendication 1 ou 2, **caractérisée en ce que** le premier et le second moteur d'entraînement (5A, 5B) sont des moteurs à combustion, notamment des moteurs diesel.

4. Machine de fraisage selon l'une quelconque des revendications 1 à 3, **caractérisée en ce que** le premier moteur d'entraînement (5A) et le second moteur d'entraînement (5B) ont la même puissance.

5. Machine de fraisage selon l'une quelconque des revendications 1 à 3, **caractérisée en ce que** le premier moteur d'entraînement (5A) présente une plus grande puissance que le second moteur d'entraînement (5B).

6. Machine de fraisage selon l'une quelconque des revendications 1 à 3, **caractérisée en ce que** le premier et le second moteur d'entraînement (5A, 5B) sont des moteurs de même type.

7. Machine de fraisage selon l'une quelconque des revendications 1 à 3, **caractérisée en ce que** le premier et le second moteur d'entraînement (5A, 5B) sont les mêmes moteurs d'entraînement.

8. Machine de fraisage selon l'une quelconque des revendications 1 à 7, **caractérisée en ce que** le dispositif de transmission de forces (6) présente un dispositif (8) pour l'entraînement d'au moins une pompe hydraulique (8A).

9. Machine de fraisage selon la revendication 8, **caractérisée en ce que** le dispositif (8) présente, pour l'entraînement d'au moins une pompe hydraulique, une boîte de distribution à pompe pour plusieurs pompes hydrauliques (8A).

10. Machine de fraisage selon la revendication 8 ou 9, **caractérisée en ce que** le dispositif (8) est couplé au premier moteur d'entraînement (5A) pour l'entraînement d'au moins une pompe hydraulique.

11. Machine de fraisage selon l'une quelconque des revendications 1 à 10, **caractérisée en ce que** le premier arbre de sortie (12) est couplé au premier moteur d'entraînement (5A) par le biais d'un premier dispositif de couplage articulé (7) et le second arbre de sortie (16) est couplé au second moteur d'entraînement (5A) par le biais d'un second dispositif de couplage articulé (14).

12. Machine de fraisage selon la revendication 2, ou selon la revendication 2 et en outre l'une quelconque des revendications 3 à 11, **caractérisée en ce que** le premier dispositif (11) est disposé pour la commutation du couple du premier moteur d'entraînement (5A) entre le moteur d'entraînement (5A) et le premier arbre de sortie (12).

13. Machine de fraisage selon la revendication 2, ou selon la revendication 2 et en outre l'une quelconque des revendications 3 à 12, **caractérisée en ce que** le second dispositif (15) est disposé pour la commutation du couple du second moteur d'entraînement (5B) entre le moteur d'entraînement (5B) et le second arbre de sortie (16).

14. Machine de fraisage selon la revendication 8, ou selon la revendication 8 et en outre l'une quelconque des revendications 9 à 13, **caractérisée en ce que** le dispositif (8) est disposé pour l'entraînement d'au moins une pompe hydraulique entre le premier moteur d'entraînement (5A) et le premier arbre de sortie (12).

15. Machine de fraisage selon l'une quelconque des revendications 1 à 14, **caractérisée en ce que** le premier moteur d'entraînement (5A) et le second moteur d'entraînement (5B) sont des moteurs à combustion avec des vilebrequins, dans laquelle l'angle de vilebrequin du vilebrequin du premier moteur peut être réglé par rapport à l'angle de vilebrequin du vilebrequin du second moteur.

16. Machine de fraisage selon la revendication 15, **caractérisée en ce que** l'angle de vilebrequin du vilebrequin du premier moteur d'entraînement (5A) peut être réglé par rapport à l'angle de vilebrequin du vilebrequin du second moteur d'entraînement (5B) de telle manière que les vibrations torsionnelles générées par les deux moteurs s'éliminent au moins en partie lors de la transmission commune de la puissance d'entraînement du premier et du second moteur d'entraînement (5A, 5B) à l'unité de travail (4).
